# EUROPEAN PATENT APPLICATION

(11) **EP 1 146 461 A2**
(43) Date of publication of application: **17.10.2001**
(21) Application number: 01302640.6
(22) Date of filing: 21.03.2001
(51) Int. Cl.: G06F 17/60

(54) **Computer software collaboration platform**

(30) Priority: 22.03.2000 US 532250
(71) Applicant: Lim, David, Warwick, Rhode Island 02886 (US)
(72) Inventor: Lim, David, Warwick, Rhode Island 02886 (US)
(74) Representative: Gill, David Alan

(57) **Abstract**

A software consulting, development, maintenance, and collaboration platform between end-user/SMB customers and software programmer/consultant contractors is provided. The platform provides a means whereby customers and contractors may locate each other, determine their mutual needs, and decide whether to enter into a professional engagement and can comprise an application library server (ALS) computer having resident thereon a third-party computer software application that has been developed by an authorized contractor and uploaded to the ALS for evaluation by an authorized customer.

## Description

The present invention relates to a computer software consulting, development, maintenance, and collaboration platform between customers that require customized software solutions and software programmers/consultants that are interested in and capable of providing such solutions.

Although the proliferation of the personal computer over the last twenty years has led to the development of a wide variety of off-the-shelf computer software applications, many end-users and small- and medium-sized businesses (SMBs), including departments within large corporations that may be considered to be SMBs, require customized systems and applications to achieve their business objectives. However, it can prove difficult for an end-user, or SMB, to locate and identify the best source for such custom-designed software solutions.

It is common for end-users and SMBs in need of custom-designed software solutions to simply choose a consultant from the local Yellow Pages directory or to rely on a newspaper advertisement or personal recommendation in making their decision. Thus, although end-users and SMBs may be sophisticated enough to realize that they require customized solutions, they are often too busy or don't know how to obtain the best solution and service at the best price. Unfortunately, this very important and very complicated decision is often made in haste, with the result being that an inadequate or inappropriate solution is purchased at great expense of time and money.

Furthermore, it is not uncommon for end-user/SMB customers to have a general idea of the type of customized solution that their business requires, but not to have a comprehensive understanding of all of the features and functionalities that the solution should include. Alternatively, they might know exactly what they want, but not effectively communicate their needs to the developer/consultant contractor. As a further complication, there is usually no way for the customer to be able to evaluate the look and feel of the solution until its implementation and so well after the expense has been incurred.

However, even where the customer is able to completely specify the desired solution, there remains significant financial uncertainties related to the total cost of its acquisition and implementation. For example, there can be no guarantee that the solution will perform as specified, nor how much additional work must be done in order to fully implement the solution, and how much training will be required before the solution begins to generate business efficiencies, etc.

Likewise, contractors that specialize in creating customized solutions face significant challenges. Often they must spend substantial amounts of time networking, marketing, and responding to requests-for-proposals (RFPs) in order to grow their business. This may lead to a situation where they are spending so much time on non-revenue-generating activities that they must charge higher prices in order to operate profitably. However, if they are required to raise their fees too high in order to show a profit, then they run the risk of being undercut by competitors on price and losing the very business that they tried to generate. The greatest challenge facing these professionals is to expand their marketing reach from the local to the national or even global level, or to penetrate markets in different industries, without having to charge fees that are significantly above their competitors or reducing their ability to do the work that is thus generated.

Another challenge is that contractors may place a winning bid on a project only to later discover that it required a significantly greater amount of resources than anticipated to complete to the customer's satisfaction. While an undesirable outcome for the contractor occurs where these increased costs eliminate the profit from the engagement, or, worse, even result in an economic loss to the consultant, the worst-case is where the contractor is not able to complete the work due to an incomplete understanding of the actual project requirements. While this is usually the result of the customer's failure to understand what is actually needed to meet its business objectives, the blame will be placed on the contractor, which will not contribute to the success of the contractor's business. What is needed is a way to bring customers and contractors together in such a way as to increase the customer's available source options without increasing the time or expense of identifying all suitable contractors and similarly to increase the contractor's market exposure without increasing the time and expense of engaging in promotional activities. In addition, it is desirable to both customers and contractors to reduce the uncertainties related to the requirements, functionality, implementation, and costs associated with developing a custom software solution.

The invention seeks to provide for a system and related process for assisting customer/contractor contact and collaboration and having an advantage over known systems and processes.

In its most general aspect, the present invention is directed to a software consulting, development, maintenance, and collaboration platform between end-user/SMB customers and software developer/consultant contractors. The platform provides a means whereby customers and contractors may locate each other, determine their mutual needs, and decide whether to enter into a professional engagement. For example, in one anticipated implementation, customers may access and evaluate previously developed software applications, determine how much, if any, customization that they desire, and create and post a request-for-proposal in an online auction. Contractors may then competitively bid on a project posted by a customer in an online auction.

In another planned implementation, software developers/consultants may post professional profiles, including marketing materials, professional biographies, and work samples. These profiles may be dynamically searched by an end-user or SMB in order to identify one or more suitable potential solution providers that they can interview.

By bringing customers and contractors together in a collaborative online environment, the platform of the present invention enables both parties to most efficiently and confidently enter into a professional engagement that meets their needs. In addition, the platform of the present invention enables both parties to collaboratively generate customized software that both meets the customer's needs and does not require the consultant to create numerous iterations of the customized solution until the customer is satisfied, thereby increasing the consultant's profitability.

The software consulting, development, maintenance, and collaboration platform of the present invention comprises six main components. First, an application library server (ALS) contains software applications that have been developed by member contractors for evaluation by member customers. Second, a graphical user interface (GUI) Builder enables a member customer
to create exactly the user interface that their business requires. Third, a Note Builder enables both member customers and member contractors to annotate the GUI, including the screen display, menus, toolbars, etc., so that the contractor understands exactly what the customer desires. Fourth, a request-for-proposal (RFP) Builder compiles all of the information that the customer has entered into the various platform data elements, including the GUI Builder and Note Builder, in order to create an RFP that the customer may post in the fifth major component of the platform, an online auction service. Sixth, when a customer selects a consultant, a Contract Manager will create and maintain a contract, based on all of the agreed-on terms of the engagement. Additionally, by providing an escrow service that does not release to the contractor the funds deposited by the customer until all of the terms of the agreement have been satisfied to both parties's satisfaction, as determined by the Contract Manager, the platform of the present invention provides both parties with the confidence that they are not wasting their time. The customer has confidence that the solution will meet its needs and the contractor has confidence that payment is assured if the solution satisfies the terms of the RFP.

Similarly, consultants and developers can increase their revenues by accessing the larger national and global markets that they would be unable to reach efficiently in the past. They can also benefit by selling similar packages with minor modifications. Other benefits to end-users and SMBs include the ability to browse, demo, and test applications of interest to them on the ALS at their convenience and without the assistance of consultants at any time. This enables the customer to be an informed, organized purchaser before they decide what to buy.

The present invention can advantageously provide for a collaborative software consulting, development, and maintenance platform between customers and consultants that overcomes the above deficiencies of the custom solution development process.
The present invention can also provide for a collaborative platform that enables the customer to evaluate a variety of fully functional computer software applications that have already been developed by a number of contractors.
Further, the present invention can provide for a collaborative platform in which consultants may allow prospective customers to access fully functional computer software applications that they have already developed without fear that their work product will be misappropriated.
Advantageously the present invention can provide a collaborative platform that enables a customer to create the exact graphical user interface that they desire.
It is still a further advantage of the present invention that a collaborative platform can be provided in which the customer and consultant are able to collaborate electronically to develop the customized solution that the customer desires.
Advantageously the collaborative platform can eliminate the financial uncertainties attendant to the custom
software development process and can further provide a means for customers to create an RFP accurately and comprehensively specifying their needs and to entertain bids from contractors.
The present concept can then provide a means for consultants to obtain additional work and to maximize their efficiency by understanding the scope of work involved before responding to an RFP.

The invention is described further hereinafter, by way of example only, with reference to the accompanying drawings in which:
Fig. 1 is a schematic diagram showing the components and functioning of a computer software collaborative platform according to an embodiment of the present invention;
Fig. 2 is a hierarchical representation of a website map showing the organization of the computer software collaborative platform components according to an embodiment of the present invention;
Fig. 3 is a schematic diagram showing the components and functioning of the GUI Builder of the computer software collaborative platform according to an embodiment of the present invention;
Fig. 4 shows a web page or HTML presentation of the GUI Builder of the computer software collaborative platform according to an embodiment of the present invention;
Fig. 5 is a schematic diagram showing the components and functioning of the NOTE Builder of the computer software collaborative platform according to an embodiment of the present invention;
Figs. 6A and 6B show web page or HTML presentations of the NOTE Builder of the computer software collaborative platform according to an embodiment of the present invention;
Fig. 7 is a schematic diagram showing the components and functioning of the RFP Builder of the computer software collaborative platform according to an embodiment of the present invention; and

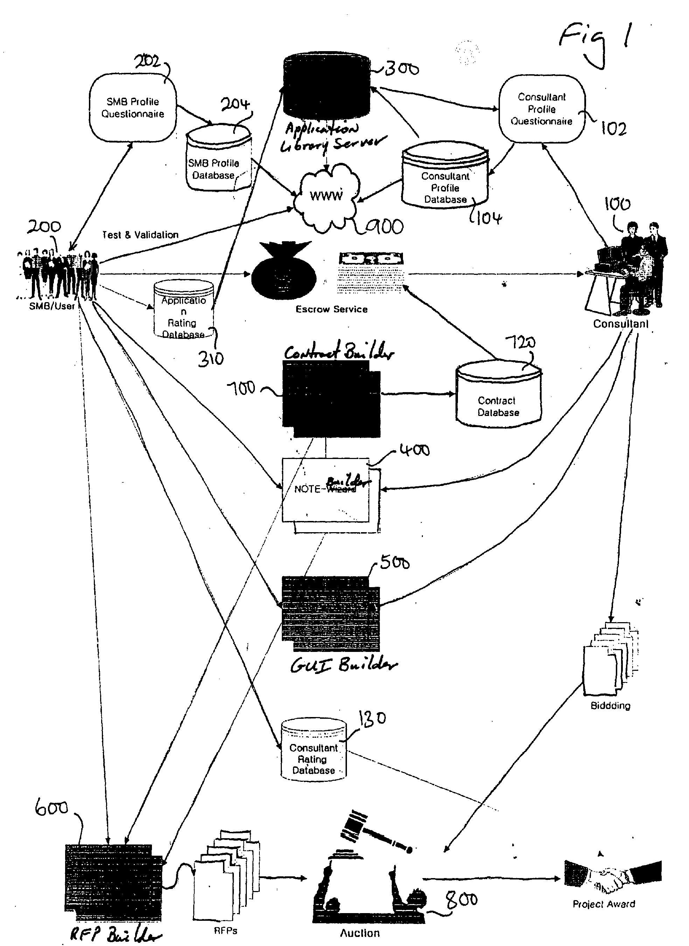

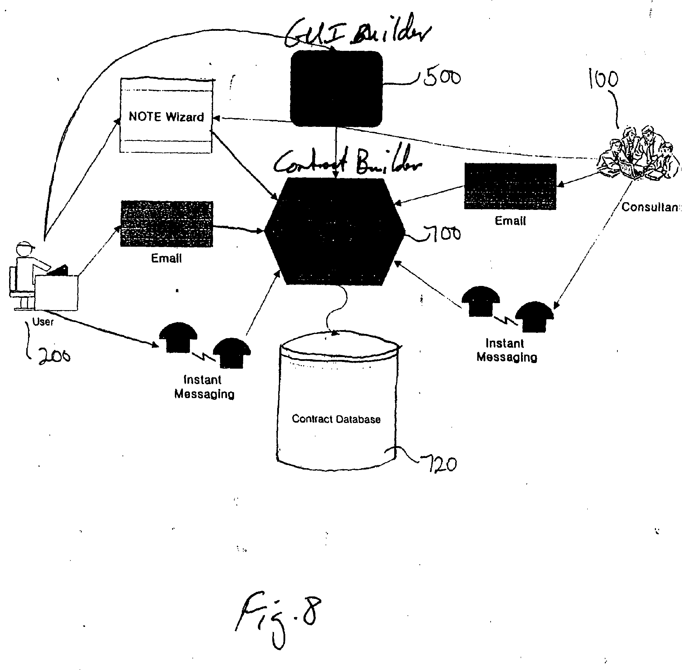

Fig. 8 is a schematic diagram showing the components and functioning of the Contract Builder of the computer software collaborative platform according to an embodiment of the present invention; Turning now to the drawings, Fig. 1 is a schematic diagram showing the components and functioning of a computer software collaborative platform according to the present invention. While the following discussion is specific to a system that relates to the collaborative creation by customer and contractor of customized computer software business solutions, it is understood that the principles of the present invention have wider applicability to collaborative creation of other software and files, such as computer games, web pages, audio and video files, and multimedia presentations, to list a few examples.

One essential feature of the platform of the present invention is its character as a seamless and secure communication and collaboration tool between consultant/developer contractors 100 and SMB/user customers 200 using the World Wide Web 900.

In addition to its role as a communication and collaboration tool, the platform of the present invention also enables data acquisition and management concerning all member customers and contractors. The first time that a contractor 100 that wishes to sell services using the platform is required to complete a contractor profile questionnaire 102 in order to register as a member. Each contractor profile questionnaire 102 is retained in contractor profile database 104.

Once a contractor is registered as a member, he has the option of publishing fully functional, non-customized software applications that he has already developed to an application repository on the Application Library Server 300 where they may be accessed by potential customers. Because Application Library Server 300 uses thin-client technology, the consultant can allow potential customers to test, run, and evaluate a published application using the customer's live data using a conventional web browser without fear of having the application pirated. This eliminates the need for the customer to download, install, and later uninstall time-bombed, limited evaluation software.

Similarly, the first time that a customer 200 accesses the platform, the customer is required to complete a customer profile questionnaire 202 in order to register as a member. Each customer profile questionnaire 202 is retained in customer profile database 204. Once the customer 200 is registered, he can run as many of the applications published to application library server 300 as he likes. In order to evaluate an application, customer 200 merely selects it and runs from application library server 300.

Customer 200 is allowed to enter his own, live data into the data fields of the application in order to evaluate its operation. When customer 200 is done evaluating an application, he merely quits it. Because it is not resident on his hard drive, there is no need for him to uninstall it. Every time that customer 200 quits an application, he can complete a rating and review form and submit it electronically to the platform. The data from the completed form will be aggregated with data from forms that were previously submitted for that application. The aggregated data are retained in application rating database 310. Application rating database 310 is accessed by application library server 300 to list the ratings received by each application resident in application library server 300. Thus, a customer 200 can select an application to evaluate based in whole or in part on the rating that it has received from other customers that have already evaluated it.

Once customer 200 determines which, if any, customizable software application in application library server 300 most closely suits his needs, he may annotate the application using NOTE Builder 400 to describe the customization that he desires. If customer 200 determines that none of the applications in application library server 300 are suitable to meet his needs, then he may use GUI Builder 500 to design the input/output (I/O) screen format and hard copy print out that he desires. GUI Builder 500 enables customer 200 to create his ideal screen display layout, data entry layout, and report layout, both for on screen display and hard copy printout. Contractor 100 can then make those layouts operational.

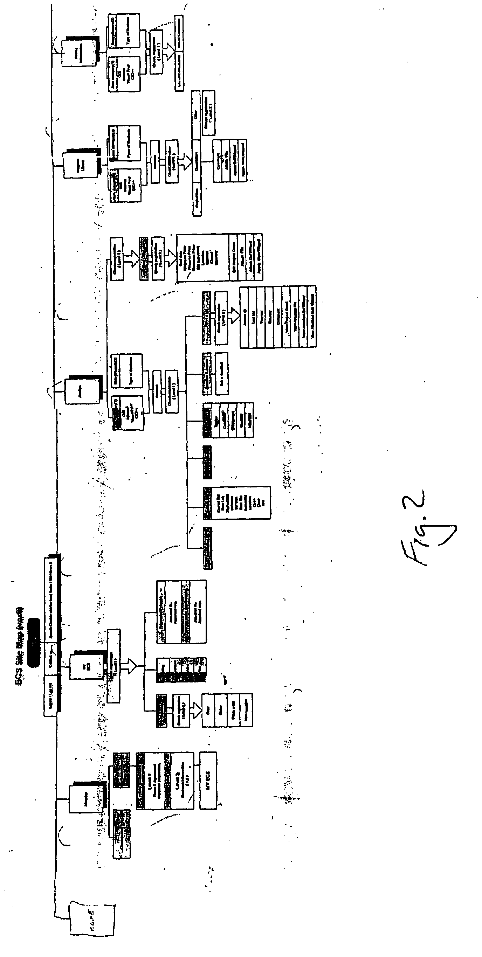

Fig. 2 is a hierarchical representation of a website map showing the organization of the computer software collaborative platform components according to an embodiment of the present invention.

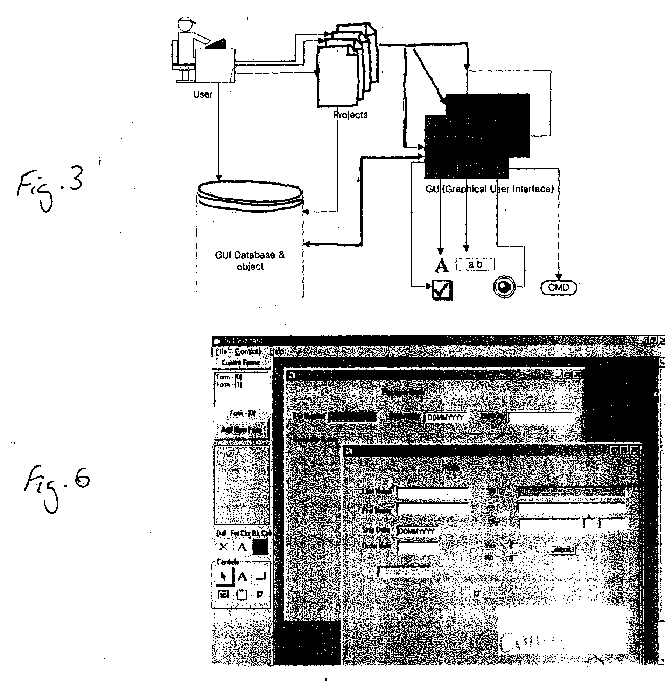

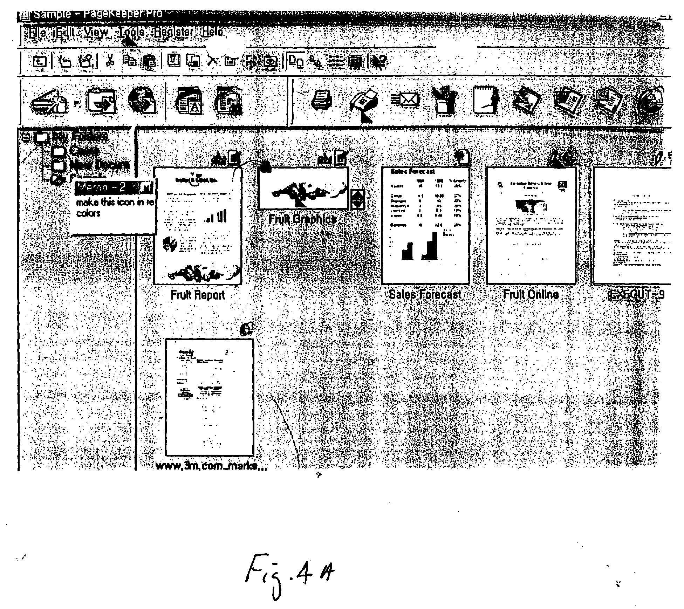

Fig. 3 is a schematic diagram showing the components and functioning of NOTE Builder 400 of the computer software collaborative platform according to the present invention. Figs. 4A and 4B show web page or HTML presentations of the NOTE Builder of the computer software collaborative platform according to the present invention.

NOTE Builder 400 is a software tool that may be used by contractor 100 or customer 200 to attach an annotation 450 to objects on the screen or GUI of the application selected. Annotation 450 references a text file or other media file, such as graphics, sound, etc. into which information concerning the object may be entered. The referenced files may be of any size, although in practice a default maximum may be set in order to enhance the processing speed of the platform. Annotation 450 is attached to the targeted object using a point-click method.

When NOTE Builder 400 is running, notepad icon 420 is displayed on status bar 410. Notepad icon 420 is activated by pointing the regular, arrow-shaped cursor to it and clicking the mouse or other entry button or key to enter notepad mode. On entry into notepad mode, regular arrow-shaped cursor 432 changes to a notepad mode cursor 422 and notepad icon 420 changes to regular mode icon 430. Return to regular mode is likewise accomplished by pointing notepad mode cursor 422 to regular mode icon 430 and clicking the mouse or other entry button or key.

When notepad mode cursor 422 is clicked on the location where customer 200 wishes to add an annotation, a default-sized GUI notepad 452 appears and is ready to receive input. Each annotation 450 for consultant 100 and customer 200 is assigned a sequential reference number. NOTE Builder 400 is capable of differentiating between consultant 100 and customer 200 and distinguishes their notes by using different coloured icons and notepads. In addition, annotations may be coded with a search item for automatic retrieval. Each annotation consists of an icon pointing to the object that is the subject of the annotation and the attached file. Where the attached file is a text file, clicking on the annotation icon brings up a notepad containing the text. The default background colour of customer notes may be one colour, such as yellow, and the default background colour of consultant notes may be another, such as sky blue.

Moving notepad mode cursor 422 and clicking the mouse or other entry button or key inside notepad 452 activates the data entry and edit mode of notepad 452. This change of mode is indicated visually by a slight shade change in the notepad background colour. The mode change may also be indicated by an audible signal or other visual indication. Data pertinent to the annotation may be entered via keyboard, voice-recognition software, or other input means. If text spills over the default notepad box, the previously entered text scrolls upward to show the text that is currently being entered. Customer 200 can also resize the notepad box so that all of the annotation is displayed and the text will fill automatically.

When customer 200 is finished creating annotation 450, he can close notepad 452 by clicking close icon 456 on the notepad 452 window frame 454. Closing notepad 452 creates a small annotation icon 458 attached to the annotated object. In addition notepad 452 is time-stamped on closing to record the date and time that the annotation was made. Annotation icon 458 may take any number of forms, but in a preferred embodiment is a triangle bounding a numeral that corresponds to the annotation's sequential reference number.

To view annotation 450, the cursor is pointed to small annotation icon 458, and notepad 452 reappears. It is important to note that while the creator of an annotation may edit or reposition the annotation on the GUI, all other users may only view the annotation.

When all annotations have been made, clicking notepad mode cursor 422 on regular mode icon 430 on status bar 410 resumes regular mode. This is indicated by the change of regular mode icon 430 to notepad icon 420 and the change of notepad mode cursor 422 to regular arrow-shaped cursor 432. Thus ends the annotation cycle.

Customer 200 can retrieve previous annotations that have been created by himself or by consultant 100 and add multiple threaded annotations to the
same object. In a preferred embodiment, a visual indicator, such as a change in the colour or hue of small annotation icon 458 or an asterisk in place of an ordinal numeral therein, shows that there exists multiple annotations. It is desired that the threaded annotations retain the distinction between consultant's annotations and customer annotations based on the background colour of the text entered by each. However, it is also envisioned that other visual distinctions may be used, such as the colour of the text, italicizing either the consultant or customer annotations, or the like.

Both the customer and the consultant can retrieve all notes attached to the GUI with numbered icons. The contents of the notepads and the GUI can be printed in such a way that the GUI with the numeric flag icons being printed first and the contents of each notepad being printed separately, with customer notes first and consultant notes second, by chronological order, by the order of the objects on the GUI, etc.

Each customer and consultant may have many projects. Each project can have multiple GUIs. Each GUI may have multiple objects. Each object may have multiple notepads created by the customer or consultant, each notepad having a different timestamp. In addition to manually selecting and viewing annotations, all annotations can be saved and retrieved by keyword, author, time, object, etc.

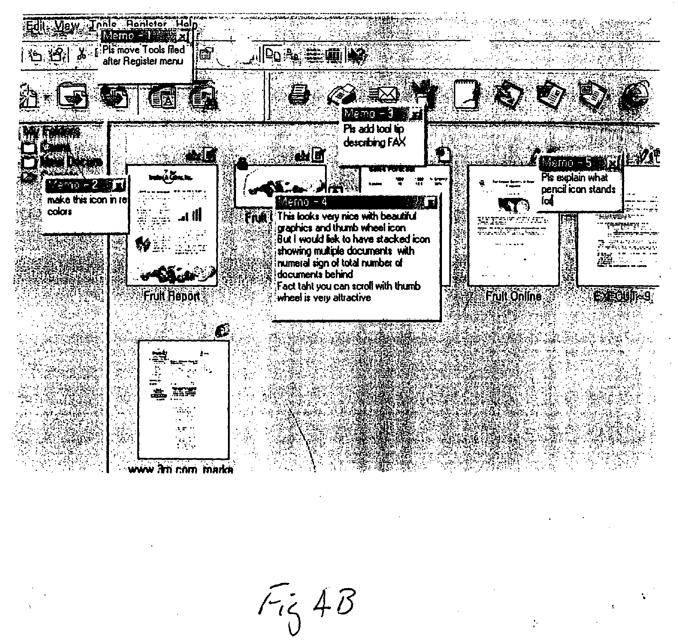

Fig. 5 is a schematic diagram showing the components and functioning of GUI Builder 500 of the computer software collaborative platform according to the present invention. GUI Builder 500 is a graphical user interface drawing design tool having object components that can be used in standard Visual(r) and object-oriented programming tools. Customer 200 can design the GUI that best suits his needs, save it to the GUI database, and open or import it directly into the Visual(r) line of programming tools, such as Visual(r) Basic, Visual(r) C++, etc. This will save significant time by eliminating the need for the programmer to re-create the user interface desired by customer 200. This time savings is particularly significant where contractor 100 is not the programmer that will customize the application, by eliminating the possibility of mis-communication of the design preferences of customer 200 between contractor 100 and the programmer. In addition, GUI Builder 500 eliminates the introduction of errors due to the inaccurate representation of the original design that the customer desired. GUI Builder 500 empowers the customer to design exactly the user interface that he desires. Each customer can have multiple projects. Each project consists of many GUIs (layouts) and each GUI can be a display screen, a data input screen, or a report on a screen display or hard copy printout. In addition, GUI Builder 500 also provides optional components (e.g., pull-down menus, combo boxes, thumb wheels, etc.) to customers that have the ability and understanding necessary to use such advanced components.

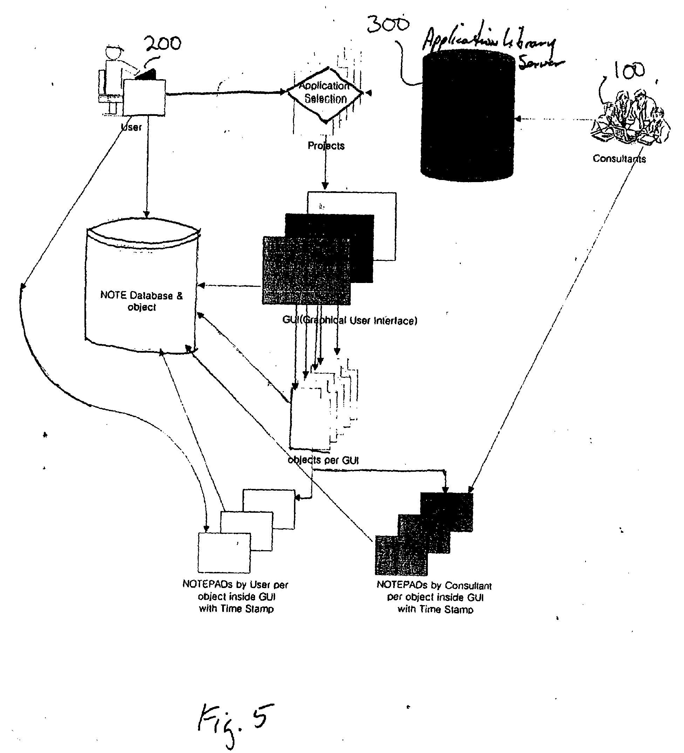

Fig. 6 shows a web page or HTML presentation of the GUI Builder of the computer software collaborative platform according to the present invention. If the customer does not find an application that has a GUI that meets the customer's needs, or if the customer prefers the GUI of one application but the functionality of another, then the customer may use the GUI Builder to create a customized GUI that meets the customer's needs.

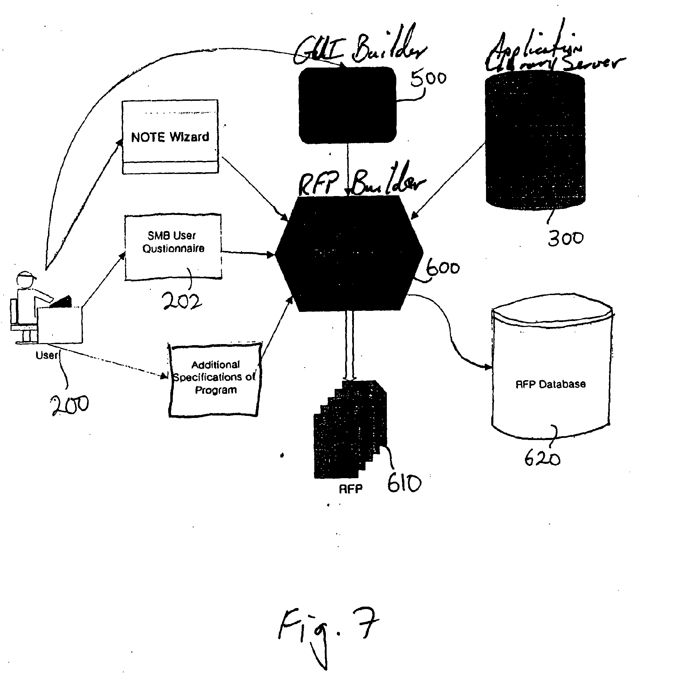

Fig. 7 is a schematic diagram showing the components and functioning of RFP Builder 600 of the computer software collaborative platform according to the present invention. RFP Builder 600 collects information from customer 200, customer profile questionnaire 202, NOTE Builder 400, GUI Builder 500, and additional specifications that may be entered by customer 200 into the RFP Builder 600 interface and compiles this information to create RFP 610 that
is stored in RFP database 620. Customer 200 can review, revise, and submit RFP 610 to online auction 800. Member consultants 100 can respond to RFP 610 by submitting a bid to auction 800. The competitive bidding process of auction 800 ensures that the lowest possible price is paid by customer 200 without sacrifice to the quality of the solution or the service. RFP 610 can be linked to an existing application in the application library server, to NOTE Builder 400, and to GUI Builder 500, so that when a successful bidder is selected, RFP 610 may enable successful contractor 100 to begin developing the customized solution by incorporating all of the information accumulated across the platform to that point.

Fig. 8 is a schematic diagram showing the components and functioning of Contract Manager 700 of the computer software collaborative platform according to the present invention. Contract Manager 700 collects information that is relevant to both customer 200 and the successful contractor 100 chosen for the engagement and incorporate it into a proposed contract between the parties. This information is collected from RFP 610, any addenda thereto, NOTE Builder 400, GUI Builder 500, and any E-mail and instant messages sent between contractor 100 and customer 200 from within the collaboration platform.

Electronically signed requests for revisions to the proposed contract may be sent to an opposite party and if the opposite party electronically countersigns and returns the revision request to the originating party, and if the originating party confirms the countersigned revision request, then it will become part of the binding agreement between the parties, represented by contract file 710, once the user passwords of the user passwords of both contractor 100 and customer 200 are authenticated by Contract Manager 700. Once the particulars of contract 710 are determined to both party's satisfaction, contract 710 is electronically signed by both parties, a contract number is assigned to contract 710, and contract 710 is stored in secured contract database 720.

The contents of contract file 710 may be amended using the same procedure outlined above for revision requests. Again, the user passwords of both contractor 100 and customer 200 must be authenticated in order for the amendment (s) to be entered. Contract 710 will remain in contract database 720 until the project is finished and delivered, as agreed. Upon completion of the engagement, as indicated by the approval of customer 200, Contract Manager 700 will authorize the release from escrow of the engagement fee to consultant 100. Contract Manager 700 may also be used to search keywords to check the contents of the contract. Perhaps most significantly, Contract Manager 700 will provide the basis for resolving any potential disputes between the parties.

Once contract 710 is signed and while the commissioned software solution is being developed, customer 200 can monitor the progress of development via a web browser using the contract number. By enabling this easy validation process to monitor project status, significant time and money is saved by both contractor 100 and customer 200. In addition, the potential risks associated with a financial transaction between parties who were previously unknown to each other is greatly reduced.

To further encourage honorable dealing, both contractor 100 and customer 200 are provided with an opportunity to evaluate their experience dealing with the opposite party. Contractor 200 will be sent an E-mail questionnaire to complete directed to the ease of working with customer 200 and other aspects of the engagement. The completed questionnaire will be stored in customer rating database 120 for reference by other contractors. Similarly, customer 200 will be sent an E-mail questionnaire to complete directed to the ease of working with contractor 100, the satisfaction of customer 200 in the custom solution provided, and other aspects of the engagement. The completed questionnaire will be stored in contractor rating database 130 for reference by other customers. Thus, because members may be rated by parties with whom they have previously interacted, it is in their best interest to perform at a very high level.

While this invention has been particularly shown and described with references to specific embodiments thereof, it will be understood by those skilled in the art that various changes in form and details may be made therein without departing from the spirit and scope of the invention as defined by the appended claims.

## Claims

1. A computer software collaboration platform for use by authorized users, including both customers and contractors, to develop customized computer software applications, the platform comprising:
(a) an application library server (ALS) computer having resident thereon a third-party computer software application that has been developed by an authorized contractor and uploaded to the ALS for evaluation by an authorized customer; and
(b) a platform server computer arranged for communication with the ALS and with a computer network, said platform server computer having resident thereon computer software applications that may be accessed by authorized users via the worldwide computer network, said applications including:
(1) a platform graphical user interface (GUI) arranged for accepting data input from a user and transmitting said data to pre-defined data repositories and that is further capable of accessing other computer software applications;
(2) a Note Builder arranged to enable both authorized customers and authorized contractors to annotate a GUI of a third-party computer software application resident on the ALS so that a contractor understands exactly what customization a customer desires;
(3) a request-for-proposal (RFP) Builder that arranged for compiling information entered by a customer into the platform GUI in order to create an RFP;
(4) an online auction application that a customer may use to post the RFP, that a contractor may use to bid on the RFP, and arranged to enable the customer to select a contractor based on the bids; and
(5) a Contract Manager capable arranged for creating and maintaining a contract for services between a customer and a consultant.

2. A platform as claimed in Claim 1, and arranged such that users are authorized following completion and submission of a user profile questionnaire using the platform GUI.

3. A platform as claimed in Claim 1, wherein each customer profile questionnaire is retained in a profile database.

4. A platform as claimed in Claim 1, 2 or 3, wherein the platform further comprises a GUI Builder resident on the platform server that enables an authorized customer to create exactly the GUI and hardcopy printout desired by the customer for the customized computer software application.

5. A platform as claimed in Claim 1, 2, 3 or 4, wherein said platform further includes a data repository where authorized contractors may post professional profiles for review by authorized customers.

6. A platform as claimed in Claim 5, wherein said profile includes information selected from the group consisting of marketing materials, professional biographies, and work samples.

7. A platform as claimed in Claim 5, wherein said profiles may be dynamically searched by an authorized customer in order to increase the number of potential solution providers that they can interview.

8. A platform as claimed in any one of Claims 1 to 7, wherein an authorized customer can select and run any of the third-party applications published to the ALS.

9. A platform as claimed in Claim 8, wherein the customer may enter live data into the data fields of the selected third-party application in order to evaluate the application's operation.

10. A platform as claimed in Claim 9, wherein when the customer finishes evaluating the selected application the customer may complete and submit a rating and review form specific to that application.

11. A platform as claimed in Claim any one of the proceeding claims, wherein an annotation may be attached to a particular element of the GUI.

12. A platform as claimed in Claim 11, wherein the Note Builder is capable of differentiating between an annotation entry received from a consultant and an annotation entry received from a customer and is further capable of distinguishing the respective entries by using different visual indicators for each entry.

13. A platform as claimed in Claim 11 or 12, wherein while the creator of an annotation may edit or reposition the annotation on the GUI, all other users may only view the annotation.

14. A platform as claimed in any one of the proceeding claims, wherein the RFP can be linked to an existing application in the ALS that the customer has reviewed and annotated, so that when a contractor is selected the RFP may enable the contractor to begin developing the customized application by incorporating all of the information relative to the customer that has been accumulated across the platform.

15. A platform as claimed in Claim 4,
wherein the RFP Builder incorporates into the RFP information entered by the customer into the GUI Builder.

16. A platform as claimed in Claim any one of the preceding claims, wherein the Contract Manager is capable of collecting information that is relevant to both the customer and the selected contractor chosen for the engagement and further capable of incorporating the collected information into a proposed contract between the parties.

17. A platform as claimed in Claim 16, wherein the information collected includes information contained in the RFP, any addenda thereto, the Note Builder, and any electronic communication between contractor and customer from within the collaboration platform.

18. A platform as claimed in any one of the preceding claims, and arranged such that electronically signed requests for a revision to the proposed contract may be sent to an opposite party and if the opposite party electronically countersigns and returns the revision request to the originating party, and if the originating party confirms the countersigned revision request, then the revision will become part of the binding agreement between the parties, represented by a contract file, once the user passwords of both the contractor and the customer are authenticated by the Contract Manager.

19. A platform as claimed in any one of the preceding claims, wherein once the particulars of the contract are determined to each party's satisfaction and the contract is electronically signed by both parties, a contract number is assigned to a contract file that contains the terms of the agreement and the contract file is stored in secured contract database.

20. A platform as claimed in Claim 19, wherein electronically signed requests for a revision to the contract may be sent to an opposite party and if the opposite party electronically countersigns and returns the revision request to the originating party, and if the originating party confirms the countersigned revision request, then the revision will become part of the binding agreement between the parties, represented by the contract file, once the user passwords of both the contractor and the customer are authenticated by the Contract Manager.

21. A platform as claimed in any one of the preceding claims, wherein the Contract Manager is capable of providing the basis for resolving any potential disputes between the parties.

22. A platform as claimed in Claim 19, wherein once the contract is signed and while the customized software application is being developed, the customer can monitor the progress of development by referencing the contract number.

23. A computer software collaboration platform for use by authorized users, including both customers and contractors, to develop customized computer software applications, the platform comprising:
(a) first means for enabling said customers to evaluate a third-party computer software application without allowing said customers to download said application; and
(b) second means in electronic communication with both said first means and a worldwide computer network, said second means having resident thereon computer software applications that may be accessed by said authorized users via said worldwide computer network, said applications including:
(1) a user interface that is capable of accepting data input from a user and transmitting said data to pre-defined data repositories and that is further capable of accessing other computer software applications;
(2) means that enables both an authorized customer and an authorized contractor to annotate a graphical user interface (GUI) of a third-party computer software application resident on said first means so that the contractor understands exactly what customization the customer desires;
(3) means capable of compiling information entered by a customer into the second means user interface in order to create an RFP;
(4) means enabling a customer to post an RFP to receive competitive bids from authorized contractors, and further enabling an authorized contractor to bid on the RFP, and finally that enables the customer to select a contractor based on the bids received; and
(5) means capable of creating and maintaining a contract for services between a customer and a consultant.

24. A platform as claimed in Claim 23, wherein said second means further comprises means resident on said second means that enables an authorized customer to create exactly the GUI and hardcopy printout desired by the customer for the customized computer software application.

25. A platform as claimed in Claim 23 or 24 wherein, during the course of said evaluation, said customer may enter data into a data field contained in said third-party application.

26. A method of developing customized software solutions, said method comprising the steps of:
(a) enabling a customer to evaluate a third-party computer software application without allowing said customer to download said application; and
(b) enabling both an authorized customer and an authorized contractor to annotate the graphical user interface (GUI) of the third-party computer software application so that the contractor understands exactly what customization the customer desires.

27. A method as claimed in Claim 26 and as further comprising the steps of:
(c) compiling information received from the customer in order to create an RFP; and
(d) enabling the customer to post the RFP to receive competitive bids from authorized contractors, and further enabling an authorized contractor to bid on the RFP, and finally enabling the customer to select a contractor based on the bids received; and

28. A method as claimed in Claim 26 or 27 said further comprising the step of creating and maintaining a contract for services between the customer and the consultant.
